(19) Europäisches Patentamt
European Patent Office
Office européen des brevets

(11) **EP 4 757 246 A1**

(12) **EUROPEAN PATENT APPLICATION**

(43) Date of publication:
**10.06.2026  Bulletin 2026/24**

(21) Application number: **24218359.8**

(22) Date of filing: **09.12.2024**

(51) International Patent Classification (IPC):
*H04L 9/40* (2022.01)   *G06F 21/31* (2013.01)
*H04L 9/00* (2022.01)   *H04L 9/08* (2006.01)
*H04L 9/32* (2006.01)

(52) Cooperative Patent Classification (CPC):
**H04L 63/083; G06F 21/45; H04L 9/008;**
**H04L 9/0863; H04L 9/3226; H04L 63/0281;**
H04L 2209/76

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Orange**
**92130 Issy-les-Moulineaux (FR)**

(72) Inventors:
• **PLESA, Mihail**
  **020334 BUCHAREST (RO)**
• **POENARU, Robert**
  **020334 BUCHAREST (RO)**
• **DAVID, Simona**
  **020334 BUCHAREST (RO)**
• **IRIMIA, Sebastian**
  **020334 BUCHAREST (RO)**

(74) Representative: **Regimbeau**
**20, rue de Chazelles**
**75847 Paris Cedex 17 (FR)**

(54) **INTERACTIONS BETWEEN A CLIENT DEVICE AND AN AUTHENTICATION SERVER PROVIDING SECURITY AND PRIVACY TO STORED PASSPHRASE**

(57)    Method for enabling a client device (CD) to interact with an authentication server (AS) over a network, comprising steps performed by a singularization server (SS) of:
- receiving (S3) an encrypted passphrase and a user identifier (UI) from a stateless proxy (SP);
- determining (S4) a singularization value for said user identifier;
- applying (55) a hash function to a combination of said encrypted passphrase and said singularization value, said encryption function being associated with an encryption scheme homomorphic with respect to said hash function, and transmitting (S6) the result and said user identifier (III) to said stateless proxy (SP).

FIG. 1

**Description**

FIELD OF THE INVENTION

The invention relates to the field of cybersecurity. Specifically, it concerns the interactions between a client device and an authentication server, enabling a user to register or authenticate in order to access an online service.

BACKGROUND OF THE INVENTION

Access to many online services is protected by requiring the user to authenticate themselves. This authentication typically involves providing a user identifier (i.e., a "login") and a passphrase (most often, simply a password).
This typical scheme requires that associations between user identifiers and their corresponding passphrases be stored at a location within a network like a computer network or a telecommunication network.
These associations, or at least the passphrases, are usually hashed before being stored to prevent cyberattacks. Nonetheless, enterprises that manage their own authentication services (such as Keycloack) are increasingly vulnerable to cyberattacks targeting passwords databases.
State-of-the-art schemes for storing passphrases, including hashing with salt, are proving inadequate in the face of recent threats. A primary issue lies in the inherently low entropy of passwords chosen by users, making them susceptible to attacks. Automated password-cracking tools, such as brute-force and dictionary attacks, can efficiently exploit these weaknesses, even when salts are used.
Some proposals have been made to address the vulnerability of low-entropy passwords in authentication systems, especially those managed by an enterprise.
One approach is to use password managers, which are software applications installed generally on the client device and which aim in generating high-entropy password. Users are no longer required to choose their own password, and the automatically-generated password is stored on the client device or in a cloud, since, due to this high-entropy, it is usually difficult for a user to memorize it. However, such a scheme is not always acceptable since the password managers and/or the client device then become points of vulnerability and targets for cyberattacks.
Another approach involves implementing multi-factor authentication (MFA), which adds an additional layer of security beyond passwords. This scheme is more and more enforced but implies an extra burden on users.
Another approach consists in using a third-party authentication service, like OAuth providers or identity management platforms for instance, to offload the responsibility and the technical aspects of a secured authentication.
However, while these third-party services can indeed enhance overall security, they introduce significant privacy concerns. Relying on external providers for authentication can compromise user privacy (for instance for internal employees or customers of an enterprise), since sensitive information is shared with and potentially accessible to these third parties.
These state-of-the-art proposals allow a high level of security at the cost of loss of privacy or by placing an additional burden on users.
There is therefore a strong need to improve the situation.

SUMMARY OF THE DISCLOSURE

An object of the present proposition aims in alleviating at least partly the above-mentioned drawbacks.
In particular, it is proposed a method allowing to increase the security of the stored passphrases (or other credentials), while not jeopardizing the privacy of this sensible information.
This object is achieved with a method for enabling a client device to interact with an authentication server over a network, comprising steps performed at a stateless proxy of:

- receiving an authentication request, comprising a user identifier and an original passphrase;
- applying an encryption function to said original passphrase, and transmitting the encrypted passphrase and said user identifier to a distant singularization server;
- receiving from said singularization server said user identifier and a result of an application of a hash function to a combination of said encrypted passphrase and a singularization value, said encryption function being associated with an encryption scheme homomorphic with respect to said hash function;
- applying a decryption function to said result to get a new passphrase, and transmitting said new passphrase with said user identifier to said authentication server.

Another aspect relates to a method for enabling a client device to interact with an authentication server over a network, comprising steps performed by a singularization server of:

- receiving an encrypted passphrase and a user identifier from a stateless proxy;
- determining a singularization value for said user identifier;
- applying a hash function to a combination of said encrypted passphrase and said singularization value, said encryption function being associated with an encryption scheme homomorphic with respect to said hash function, and transmitting the result and said user identifier to said stateless proxy.

Preferred embodiments comprise one or more of the following features, which can be taken separately or together, either in partial combination or in full combination:

- during a registration phase, determining a singularization value comprises assigning a new singularization value to said user identifier and storing the association between said user identifier and said singularization value within a data repository, and wherein, during a login phase, determining a singularization value comprises retrieving said singularization value from said data repository;
- said hash function is applied to a concatenation of said encrypted passphrase and said singularization value;
- said encryption function and said decryption function are based on ElGamal algorithms;
- said singularization server is managed by a different entity than the entity managing said stateless proxy and said authentication server.

Another aspect relates to a singularization server for enabling a client device to interact with an authentication server over a network, comprising at least a processor adapted for at least performing the following steps:

- receiving an encrypted passphrase and a user identifier from a stateless proxy;
- determining a singularization value for said user identifier;
- applying a hash function to a combination of said encrypted passphrase and said singularization value, said encryption function being associated with an encryption scheme homomorphic with respect to said hash function, and transmitting the result and said user identifier to said stateless proxy.

Another object relates to a system for enabling a client device to interact with an authentication server over a network, comprising at least a stateless proxy and a singularization server as previously defined.

Another object relates to a computer program comprising code instructions for executing at least respective steps of a method as previously defined, when executed by one or several processors of a stateless proxy and/or a singularization server.

BRIEF DESCRIPTION OF THE DRAWINGS

Further features and advantages will appear from the following description of embodiments, given as non-limiting examples, with reference to the accompanying drawings listed hereunder:

- Fig. 1 illustrates a functional architecture according to embodiments of the proposed methods.
- Fig. 2 illustrates a flowchart according to embodiments of the proposed methods.
- Fig. 3 illustrates a flowchart of a step of determining a singularization value for a user identifier at a singularization server according to some embodiments.

DETAILED DESCRIPTION OF EMBODIMENTS

The proposed method aims in enabling a client device to interact with an authentication server.
The client device may include any apparatus designed for establishing data communication over a network, particularly with an online service that requires an authentication step. This client device could be a computer, a digital tablet, a smartphone, an IoT device, or similar. The network may be a computer network, a telecommunication, etc.
A typical scenario might involve a user (employee) attempting to connect to an internal service, intranet, or other internal resources of an enterprise or any other entity (public service administration, NPO, school, etc.). More specifically, the enterprise could be a small or medium-sized enterprise (SME) or a small entity that lacks the high-level capabilities to develop a comprehensive security system, but it would also be useful to larger entities to optimize their security schemes.
Other scenarios may involve a user (customer) trying to connect to an enterprise's online service, such as to purchase products or services. Once again, the proposed method can specifically cater to small or medium-sized enterprises that lack extensive IT resources.
The proposed methods can, of course, be adapted to a wide variety of scenarios in which a user's client device needs to interact with an authentication server.

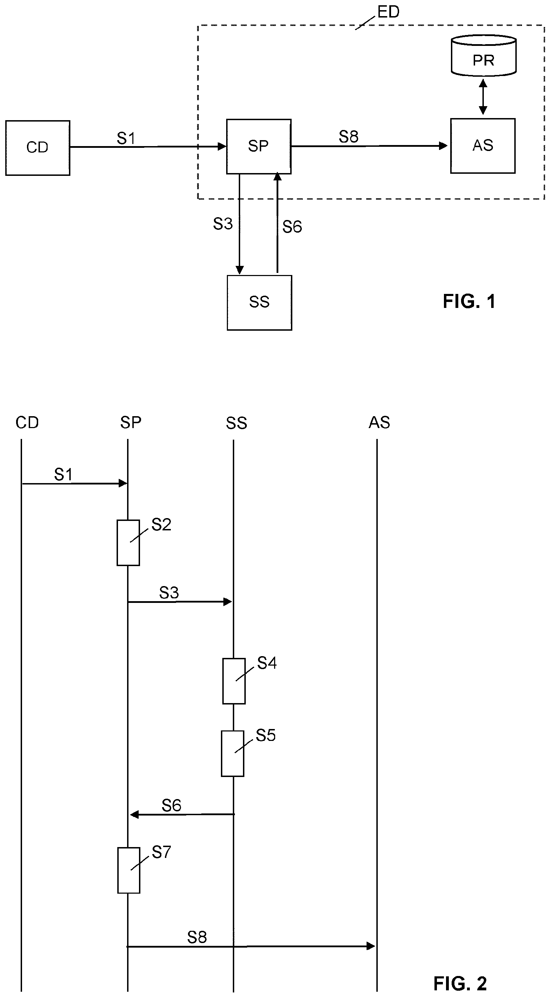

In figure 1, a user uses a client device CD to interact with an authentication server AS.

The client device CD can interact with the authentication server AS through a network.

This network may be a local-area network (LAN) or a wide-area network (WAN). For instance, an employee of an enterprise may connect to applications and services of the enterprise from a location inside the enterprise's premises through an internal LAN (Ethernet™, Wi-Fi...), or from a distant location (while homeworking for instance) through a WAN like the Internet (including by using a virtual private network, VPN).

A customer can connect to the authentication server primarily through a wide-area network.

In figure 1, the dotted box referred to as ED illustrates the enterprise domain, i.e. the functional entities under the responsibility of the (IT) manager of the enterprise. It comprises e.g. servers, data repositories etc. owned and/or operated by the enterprise and for which an authentication shall be required to get access to. Technically the enterprise domain is a set of computers and networking facilities.

The client device CD is considered here as out of this domain. For this reason, it is required to authenticate before accessing the applications and services within the enterprise domain ED.

A typical authentication scheme has two main phases: registration and login.

In the registration phase, a new user creates an account with the service. This process generally includes a step of user Information collection: the user provides essential information, such as a user identifier UI (username or the like), a chosen passphrase P, and sometimes additional information like an email address, a postal address, a birth date or phone number for verification or recovery purposes.

A passphrase is usually a password. Even when users are required to choose a password compliant with some rules (number of characters, mix of letters, capital letters and numbers, etc.), still, the entropy of such passwords is usually low.

The reason is that users are prone to choose passwords that they can memorize. Most of the time, then, at least a part of the chosen password has some meaning. For instance, they are words, which can be found in a dictionary, or well-known proper nouns (location place, famous person's name...), etc.

The user enters this information into his/her client device CD with usual means. Then, the client device CD sends an authentication request towards the authentication server AS containing (at least) a user identifier III and a chosen passphrase P.

The authentication server AS is responsible for storing an association between the user identifier III and the chosen passphrase P inside a password repository PR.

The service manager may use off-the-shelf authentication server AS, or develop his own.

An example of such an authentication server is "Keycloak". Keycloak is an open-source identity and access Management. It allows online services and applications to offload the authentication scheme to this dedicated platform: Keycloak manages the gathering of the authentication information, the storing of the associations user identifiers/passphrases, as well as the login phase.

Many other authentication systems are available or will be made available in the next years. As examples only, we can cite AuthO, Okta, OneLogin, ForgeRock, Gluu, WSO2 Identity Server, Amazon Cognito, Microsoft Azure Active Directory (AD), etc.

The term "server" shall be understood here in its functional meaning. The authentication server AS can indeed be deployed on a dedicated server, or within a cloud infrastructure, but it can also be an application running inside the same computer network than the service or application "protected" by the authentication server.

In both cases, the authentication server is considered to belong to the enterprise domain AS, since it shall be set up, configured and managed by the enterprise.

In a login phase, the client device CD sends an authentication request towards the authentication server AS containing the user identifier UI and a passphrase. The authentication server AS is responsible for determining if the provided passphrase corresponds to the stored passphrase for this user identifier UI.

If yes, access to the protected service or application can be granted. If not, the access is not granted, and the user may be challenged again for entering new credentials user identifier / passphrase.

According to the proposed method, the authentication requests are intercepted by a stateless proxy SP. This authentication request corresponds to both the registration phase and the login phase.

The stateless proxy SP belongs to the enterprise domain ED. It may be a piece of software adapted for intercepting any authentication requests received from a client device CD, hence the term "proxy".

By stateless, it is meant that the proxy does not store any data regarding the received authentication request. Each request is handled based only on the data it contains.

The proposed methods will now be explained in reference to figures 1 and 2. These figures are nonetheless illustrative only.

In a first step S1 of the proposed methods, the stateless proxy SP receives the authentication request, that comprises (at least) a user identifier UI and a passphrase P.

In a second step, S2, the stateless proxy applies an encryption function E() to the received passphrase P.

This encryption function belongs to an encryption scheme that can be defined by a couple encryption function E() / decryption function D().

The encryption function E() may use a encryption key, which may (or no) be a symmetric key. Session data shall be stored in a buffer memory of the stateless proxy SP until step S6, where the session data will be used to decrypt the data received from the singularization bugger. Session data may only comprise a decryption key (which would be the same as the encryption key, in case a symmetric encryption scheme is used).

In a third step, S3, the stateless proxy SP transmits the encrypted passphrase E(P) and the user identifier UI to a distant singularization server SS.

"Distant" means here that the singularization server does not belong to the enterprise domain DM. In other words, it is not managed by the enterprise (or entity), and does not share any other information than the ones transmitted in step S3 and in step S6, which will be elaborated below.

In still other words, the data stored with the enterprise domain ED and the singularization server SS are compartmentalized, the singularization server being managed by a different entity than the entity managing the stateless proxy SP and the authentication server AS.

The singularization server SS can be deployed as a service platform and accessible to enterprises needing an authorization mechanism.

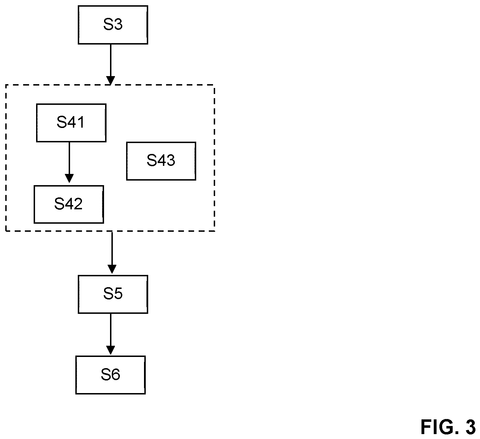

Figure 3 depicts with more details the method that could be performed by the singularization server SS, according to embodiments.

Once it has received the encrypted passphrase E(P) and the user identifier UI, in a step S4, the singularization server SS determines a singularization value for the user identifier UI.

The singularization value is a value adapted to have a high entropy. It could be a large random number, for example a 128-bits random number.

During a registration phase, determining a singularization value comprises:

- Step S41: assigning a new singularization value to the user identifier III and
- Step S42: storing the association between the user identifier UI and this new singularization value within a data repository.

The data repository is associated with the singularization server SS and aims in storing these associations for all user identifiers the singularization server deal with.

During a login phase, determining a singularization value comprises retrieving, in step S43, the singularization value from this data repository.

At step S5, the singularization server SS applies a hash function to a combination of the received encrypted passphrase E(P) and the singularization value, R.

The combination can be for instance a concatenation, for example $E(P)|R$, where . |. represent the concatenation operator.

A hash function is a one-way function that transforms input data (here the data $E(P)|R$) into a fixed-size string of characters, which typically represents the data's "fingerprint".

The hash function H() and the encryption scheme are chosen so that the encryption scheme is homomorphic with respect to this hash function.

If one notes D() the decryption function corresponding to the encryption function E(), the hash function and the encryption scheme are chosen so that:

$$\forall m, D\left(H\big(E(m)\big)\right) = H(m)$$

In step S6, the singularization server SS transmits this result to the stateless proxy SP, together with the user identifier III. This user identifier III shall be sent again since the proxy is stateless.

In step S7, once the stateless proxy SP has received these data, it applies the decryption function D() to the received result.

This decryption function D() corresponds to the encryption E(), both being associated with a same encryption scheme. In general, encryption and decryption are asymmetric but of course both functions are adapted to each other.

In other words, the stateless proxy computes $D(H(E(P)|R))$.

Since the encryption scheme E()/D() is homomorphic with respect to the hash function, one can write:

$$D\big(H(E(P)|R)\big) = H(P|R)$$

This result constitutes a new passphrase, that replaces the original passphrase P received from the client device CD.

In step S8, the stateless proxy SP transmits this new passphrase H(PIR), together with the user identifier UI, to the authentication server AS.

The authentication server AS may then proceed as if it would have received a couple UI/Passphrase from a client device (The only difference being that the passphrase has been manipulated in-between, which is unnoticeable from it).

In particular, the authentication server AS may store this association UI/ $H(P|R)$ into the repository PR. According to some embodiments, some salts could be added for this storing, and the values are hashed before being stored.

Therefore, from a client device's point of view, the process is totally transparent both at registration phase and at login phase: the client device CD submits only the UI/passphrase couple as usual. From an authentication server's point of view, also, the process is transparent, the only difference being that the received passphrase is a function of the original passphrase.

This means that any authentication server AS can be used without any adaptation. The manager of the enterprise domain ED does not need to change its authentication server or to adapt it and s/he may go on using the state-of-the-art authentication server AS already in place (e.g. Keycloack...). It is just needed to add a stateless proxy that sits between the network interface to the enterprise domain and this authentication server AS.

However, a key difference is that the passphrase $H(P|R)$ received and stored at the authentication server AS has a higher entropy than the original one, resulting in a lower probability to get accessed by cyberattacks.

The level of entropy can be tuned by adjusting the length of the singularization value K, for instance. For example, with a singularization value K coded in 128 bits, one can increase the overall entropy by minimum 128 bits over the state-of-the-art scenario.

In case the passphrase repository PR gets leaked, it would be difficult, or even impossible, to use brute-force to retrieve the hashed values stored within the repository, because of the increased entropy of the data.

It shall be noted that salt itself is usually insufficient to avoid brute-force attacks as the salts are public.

The singularization server SS does not need to know the encryption scheme E()/D(). As the encryption scheme is homomorphic with respect to the hash function, the singularization server SS can apply this hash function without having to know the original data, i.e. the passphrase. So, it cannot access neither the original passphrase P, nor the new passphrase H(PIR).

The attacker could therefore not be able to get the user's credential by compromising the singularization server SS.

The stateless proxy being, by definition, stateless, it does not hold any information, except an ephemeral key. As this key is held by the proxy during a very short time duration, the probability for an attacker to get it is very low.

In case an attacker intercepts data exchanged between the stateless proxy and the singularization server, it would then not be able to retrieve the passphrases.

In consequence, the only way for an attacker to retrieve a stored password would be to access both databases, i.e. the passphrase repository PR and the base associated with the singularization server SS. This is of course highly improbable in a practical scenario since the databases are deployed in totally separate locations.

In addition, the proposed method has minimal impact on the already-deployed security scheme. It can adapt to an existing authentication server, AS, and can be installed at minimal cost. The stateless proxy being stateless does not need to handle any keys.

According to embodiments, the encryption scheme is based on ElGamal algorithms, or, in other words, the encryption function E() and the decryption function D() are both based on ElGamal algorithms.

ElGamal encryption is a public-key cryptosystem. It uses asymmetric key encryption for communicating between two parties and encrypting the message. This cryptosystem is based on the difficulty of finding discrete logarithms in a cyclic group that is even if we know $g^a$ and $g^k$, it is extremely difficult to compute $g^{ak}$

The ElGamal cryptographic algorithm is an asymmetric key encryption scheme based on the Diffie-Hellman key exchange. It was invented by Taher ElGamal in 1985, in Taher ElGamal "A Public-Key Cryptosystem and a Signature Scheme Based on Discrete Logarithms" in IEEE Transactions on Information Theory. 31 (4): 469-472. CiteSeerX 10.1.1.476.4791. doi:10.1109/TIT.1985.1057074.

The algorithm is widely used for secure data transmission and has applications in digital signatures and encryption. For instance, the algorithm is used in GNU Privacy Guard, or in recent version of PGP.

According to this particular embodiment, in step S2, the stateless proxy SP generates an ephemeral key $K_{session}$ and applies an ElGamal encryption function of the received passphrase P as:

$$E(P) = P.h^{K_{session}}$$

where h is the public ElGamal encryption key.

As explained before, then, the stateless proxy SP transmits both the user identifier UI and this encrypted passphrase $P.\,h^{K_{session}}$ to the singularization server SS.

In step S4, the singularization server SS determines a singularization value, like a large random number, $K_{sing}$.

As explained above, this singularization value is created and assigned to the user identifier UI at registration phase, or retrieved from a repository at login phase.

In step S5, the singularization server SS applies a hash function over the concatenation of the encrypted passphrase $P.\,h^{K_{session}}$ and the singularization value $K_{sing}$.

As the encryption scheme is homomorphic with respect to this hash function, the hash function employs a same ElGamal public key, h. It can then be written:

$$H\left(E(P)\middle|K_{sing}\right) = E(P).\,h^{K_{sing}}$$

At step S6, this hash value is then transmitted to the stateless proxy SP.

At step S7, this stateless proxy SP applies the corresponding decryption function D(P), meaning it computes the following expression:

$$D\left(\left(E(P)\middle|K_{sing}\right)\right) = \left(E(P)\middle|K_{sing}\right).\,h^{-K_{session}}$$

As the encryption scheme is homomorphic with respect to this hash function this can be rewritten as:

$$\begin{aligned}
\left(E(P)\middle|K_{sing}\right).\,h^{-K_{session}} &= E(P).\,h^{K_{sing}}.\,h^{-K_{session}} \\
&= P.\,h^{K_{session}}.\,h^{K_{sing}}.\,h^{-K_{session}} \\
&= P.\,h^{K_{sing}}
\end{aligned}$$

The new passphrase is therefore $P.\,h^{K_{sing}}$.

This new passphrase is transmitted, in step S8, to the authentication server AS. It replaces the passphrase P provided by the client device CD.

The invention has been described with reference to preferred embodiments. However, many variations are possible within the scope of the invention.

## Claims

1. Method for enabling a client device (CD) to interact with an authentication server (AS) over a network, comprising steps performed at a stateless proxy (SP) of:

   - receiving (S1) an authentication request, comprising a user identifier (UI) and an original passphrase (P),
   - applying (S2) an encryption function to said original passphrase (P), and transmitting (S3) the encrypted passphrase and said user identifier (III) to a distant singularization server (SS);
   - receiving (S6) from said singularization server (SS) said user identifier (UI) and a result of an application of a hash function to a combination of said encrypted passphrase and a singularization value, said encryption function being associated with an encryption scheme homomorphic with respect to said hash function;
   - applying (S7) a decryption function to said result to get a new passphrase, and transmitting (S8) said new passphrase with said user identifier to said authentication server (AS).

2. Method for enabling a client device (CD) to interact with an authentication server (AS) over a network, comprising steps performed by a singularization server (SS) of:

   - receiving (S3) an encrypted passphrase and a user identifier (UI) from a stateless proxy (SP);
   - determining (S4) a singularization value for said user identifier;
   - applying (S5) a hash function to a combination of said encrypted passphrase and said singularization value, said encryption function being associated with an encryption scheme homomorphic with respect to said hash function, and transmitting (S6) the result and said user identifier (UI) to said stateless proxy (SP).

3. Method according to claim 2, wherein, during a registration phase, determining a singularization value comprises assigning (S41) a new singularization value to said user identifier (III) and storing (S42) the association between said user identifier (UI) and said singularization value within a data repository, and wherein, during a login phase, determining a singularization value comprises retrieving (S43) said singularization value from said data repository.

4. Method according to any of claims 1 to 3, wherein said hash function is applied to a concatenation of said encrypted passphrase and said singularization value.

5. Method according to any of the previous claims, wherein said encryption function and said decryption function are based on ElGamal algorithms.

6. Method according to any of the previous claims, wherein said singularization server (SS) is managed by a different entity than the entity managing said stateless proxy (SP) and said authentication server (AS).

7. Stateless proxy (SP) for enabling a client device (CD) to interact with an authentication server (AS) over a network, comprising at least a processor adapted for at least performing the following steps:

   - receiving (S1) an authentication request comprising a user identifier (UI) and an original passphrase (P),
   - applying (S2) an encryption function to said original passphrase (P), and transmitting (S3) the encrypted passphrase and said user identifier (III) to a distant singularization server (SS);
   - receiving (S6) from said singularization server (SS) said user identifier (UI) and a result of an application of a hash function to a combination of said encrypted passphrase and a singularization value, said encryption function being associated with an encryption scheme homomorphic with respect to said hash function;
   - applying (S7) a decryption function to said result to get a new passphrase, and transmitting (S8) said new passphrase with said user identifier to said authentication server.

8. Singularization server (SS) for enabling a client device (CD) to interact with an authentication server (AS) over a network, comprising at least a processor adapted for at least performing the following steps:

   - receiving (S3) an encrypted passphrase and a user identifier (UI) from a stateless proxy (SP);
   - determining (S4) a singularization value for said user identifier;
   - applying (S5) a hash function to a combination of said encrypted passphrase and said singularization value, said encryption function being associated with an encryption scheme homomorphic with respect to said hash function, and transmitting (S6) the result and said user identifier (UI) to said stateless proxy (SP).

9. System for enabling a client device (CD) to interact with an authentication server (AS) over a network, comprising at least a stateless proxy (SP) according to claim 7 and a singularization server (SS) according to claim 8.

10. Computer program comprising code instructions for executing at least respective steps of a method according to any one of claims 1 to 6, when executed by one or several processors of a stateless proxy and/or a singularization server.

FIG. 1

FIG. 2

FIG. 3

Europäisches
Patentamt
European
Patent Office
Office européen
des brevets

**EUROPEAN SEARCH REPORT**

Application Number

EP 24 21 8359

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/075106 A1 (KAHOL ANURAG [US] ET AL) 7 March 2019 (2019-03-07) * paragraphs [0002], [0053] - [0058], [0090]; figure 3c * ----- | 1-10 | INV. H04L9/40 G06F21/31 H04L9/00 H04L9/08 |
| A | US 2024/267209 A1 (LIANG CHUNLONG [US] ET AL) 8 August 2024 (2024-08-08) * paragraphs [0003], [0005], [0052], [0060]; figures 2,3 * ----- | 1-10 | H04L9/32 |
| A | US 2024/313976 A1 (SHIN JUNBUM [KR] ET AL) 19 September 2024 (2024-09-19) * paragraphs [0009], [0010], [0052], [0053], [0063]; figure 8 * ----- | 1-10 | |

TECHNICAL FIELDS
SEARCHED (IPC)

H04L
G06F

The present search report has been drawn up for all claims

| Place of search | Date of completion of the search | Examiner |
|---|---|---|
| Munich | 28 March 2025 | Kleppmann, Philipp |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 21 8359

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2025

| Patent document cited in search report | Publication date | Patent family member(s) | Publication date |
|---|---|---|---|
| US 2019075106 A1 | 07-03-2019 | US 2016234209 A1<br>US 2019075106 A1 | 11-08-2016<br>07-03-2019 |
| US 2024267209 A1 | 08-08-2024 | NONE | |
| US 2024313976 A1 | 19-09-2024 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **TAHER ELGAMAL**. A Public-Key Cryptosystem and a Signature Scheme Based on Discrete Logarithms. *IEEE Transactions on Information Theory.*, 1985, vol. 31 (4), 469-472